# EUROPÄISCHE PATENTSCHRIFT

(11) **EP 1 188 509 B1**
(45) Veröffentlichungstag und Bekanntmachung des Hinweises auf die Patenterteilung: **29.11.2006**
(21) Anmeldenummer: 01115165.1
(22) Anmeldetag: 22.06.2001
(51) Int. Cl.: B23K 26/38, B23K 26/06

(54) **Optische Vorrichtung zum Bohren mittels Laserstrahls**
Optical device for boring using a laser beam
Dispositif optique pour percer au moyen d'un faisceau laser

(30) Priorität: 16.09.2000 DE 10045973
(43) Veröffentlichungstag der Anmeldung: 20.03.2002
(73) Patentinhaber: ROBERT BOSCH GMBH, 70442 Stuttgart (DE)
(72) Erfinder: Schaller, Johannes, 71229 Leonberg (DE); Westphal, Claus, 71723 Grossbottwar (DE)

(56) Entgegenhaltungen:
- DD-A- 275 425
- DE-A- 19 741 029
- DE-A- 19 745 280
- US-A- 3 576 965
- US-A- 4 734 905
- US-A- 4 822 974
- US-A- 5 093 549
- US-A- 5 362 940
- US-A- 5 632 083
- US-A- 5 933 218
- PATENT ABSTRACTS OF JAPAN vol. 018, no. 498 (M-1675), 19. September 1994 (1994-09-19) & JP 06 170562 A (TOSHIBA CORP), 21. Juni 1994 (1994-06-21)
- PATENT ABSTRACTS OF JAPAN vol. 018, no. 348 (M-1630), 30. Juni 1994 (1994-06-30) & JP 06 087088 A (KAWASAKI HEAVY IND LTD), 29. März 1994 (1994-03-29)
- BOSTANJOGLO G ET AL: "PROCESSING OF NI-BASED AERO ENGINE COMPONENTS WITH REPETITIVELY Q-SWITCHED ND:YAG-LASERS" PROCEEDINGS OF THE SPIE, SPIE, BELLINGHAM, VA, US, Bd. 2789, Juni 1996 (1996-06), Seiten 145-157, XP002915455 ISSN: 0277-786X

## Beschreibung

Die Erfindung bezieht sich auf eine optische Vorrichtung zum Bohren von im Vergleich zur Materialstärke eines Werkstückes engen Löchern mittels Laserstrahl gemäß dem Oberbegriff der Ansprüche 1 und 3.

Eine optische Vorrichtung dieser Art ist in der DE 197 41 029 A1 als bekannt ausgewiesen. Bei dieser bekannten Vorrichtung, z.B. zum Bohren von Einspritzlöchern an Einspritzdüsen, wird der Laserstrahl mit einem gewünschten Radius, dem Trepanierradius, geführt, der im Wesentlichen dem gewünschten Bohrlochradius entspricht. Durch Ändern der Richtung des Hauptstrahls kann der Einstichwinkel des Strahlwerkzeuges und damit die Konizität des Bohrloches variiert werden. Zum Einstellen eines gewünschten Trepanierradius ist vor einer Fokussieroptik, mit der der Laserstrahl auf dem Werkstück gebündelt wird, eine Keilplatte angeordnet, vor der sich zum Einstellen des Einstichwinkels eine verkippbare planparallele Platte als Versetzer des Laserstrahlbündels befindet. Der Strahlversatz zur Einstellung des Einstichwinkels und die Strahlkippung zum Einstellen des Trepanierradius sind getrennt einstellbar.

Der Erfindung liegt die Aufgabe zugrunde, eine optische Vorrichtung der eingangs angegebenen Art bereit zu stellen, mit der ein anderer Aufbau insbesondere zum Einstellen des Einstichwinkels und gezielten Formen des Bohrlochlängsschnitts erhalten wird.

Diese Aufgabe wird jeweils mit den Merkmalen der unabhängigen Ansprüche 1 und 3 gelöst. Bei einer Ausführungsform ist also vorgesehen, dass die Anordnung mindestens ein Ablenkspiegel der Auslenkoptik ist, dessen optischer Abstand relativ zur Fokussieroptik parallel zur optischen Hauptachse änderbar ist.

Der Ablenkspiegel, der z.B. bei einer optischen Vorrichtung zum Bohren mit Scanneroptik zum Lenken des Laserstrahls vorhanden ist, kann durch seine parallel zur optischen Hauptachse verschiebliche Lagerung in unterschiedlichen Abständen von der Linse und damit außerhalb deren Brennpunkts positioniert werden, so dass das Laserstrahlbündel in unterschiedlichen Winkeln auf die Fokussieroptik gerichtet werden kann und damit auch in unterschiedlicher Hauptrichtung auf das Werkstück ausrichtbar ist. Hierdurch ergeben sich entsprechend der Position des Ablenkspiegels unterschiedliche Einstichwinkel und damit Längsschnitte der Bohrung, wobei z.B. eine sich von der Eintrittsöffnung der Bohrung zur Austrittsöffnung erweiternde oder verengende Kontur einstellbar ist und unterschiedliche Konizitäten ermöglicht werden. Der Längsschnitt kann dabei noch dadurch variiert werden, dass bezüglich des Werkstückes der Laserstrahl an unterschiedlichen Stellen, z.B. näher an der Austrittsseite oder näher an der Eintrittsseite des Bohrloches fokussiert wird. Die Auslenkoptik kann dabei insbesondere auch so gestaltet sein, dass unterschiedliche Querschnittsformen des Bohrloches erzielbar sind. Bei einer Scanneroptik mit zwei Spiegeln, die um zwei zueinander orthogonale Achsen drehbar sind, geschieht dies in an sich bekannter Weise dadurch, dass die Spiegel in bestimmter Weise getrennt voneinander angesteuert werden.

Vorteilhafte Maßnahmen bestehen zur Änderung des optischen Abstandes dabei darin, dass der Spiegel und/oder die Fokussieroptik verschieblich gelagert ist/sind und/oder ein die optische Weglänge beeinflussendes Element zwischengeschaltet ist.

Ein weiterer Aufbau zum Erzielen eines gewünschten Bohrlochlängsschnitts wird dadurch erreicht, dass zur Änderung der optischen Weglänge zwischen der Ablenkoptik und der Fokussieroptik die Keilplatte allein oder als Einheit zusammen mit der planparallelen Platte parallel zur optischen Hauptachse und/oder die Fokussieroptik verschieblich gelagert ist/sind. Durch die Verschiebung der Keilplatte bzw. Fokussieroptik im Zusammenwirken mit der planparallelen Platte sind wiederum unterschiedliche Einfallswinkel auf der Fokussieroptik und in der Folge unterschiedliche Einstichwinkel mit den vorstehenden Formungsmöglichkeiten erzielbar, wobei auch hierbei eine weitere Beeinflussung der Längskontur durch Einstellung des Brennpunktes relativ zu dem Werkstück möglich ist. Ferner kann auch ein die optische Weglänge beeinflussendes Element zwischen Auslenkoptik und Fokussieroptik geschaltet sein.

Eine vorteilhafte Ausgestaltung der Vorrichtung ergibt sich dadurch, dass mindestens eine Linse der Fokussieroptik zum Bestimmen des Einstichwinkels mit speziell gestalteten Brechungsindizes ausgebildet ist. Durch das speziell ausgebildete Brechungsverhalten der Fokussieroptik lässt sich die Kontur des Bohrungslängsschnittes weiterhin gezielt beeinflussen.

Die optische Vorrichtung, beispielsweise mit einer Scanneroptik oder Trepanieroptik, eignet sich zum Bohren bzw. Schneiden präziser Löcher in Werkstücke wie z.B. Einspritzdüsen, wobei die Lochweite im Vergleich zur Materialstärke relativ gering ist, z.B. weniger als die Hälfte der Materialstärke beträgt.

Beispielsweise ist eine Bohrung einer Weite von 100 µm als Durchgangsloch in ein Werkstück einer Stärke von mehr als 1 mm einbringbar.

Die Erfindung wird nachfolgend anhand von Ausführungsbeispielen unter Bezugnahme auf die Zeichnungen näher erläutert. Es zeigen:
- Fig. 1: eine optische Vorrichtung mit Scanneroptik zum Bohren mittels Laserstrahls in schematischer Darstellung und
- Fig. 2: eine weitere optische Vorrichtung mit Trepanieroptik zum Bohren mittels Laserstrahl in schematischer Darstellung.

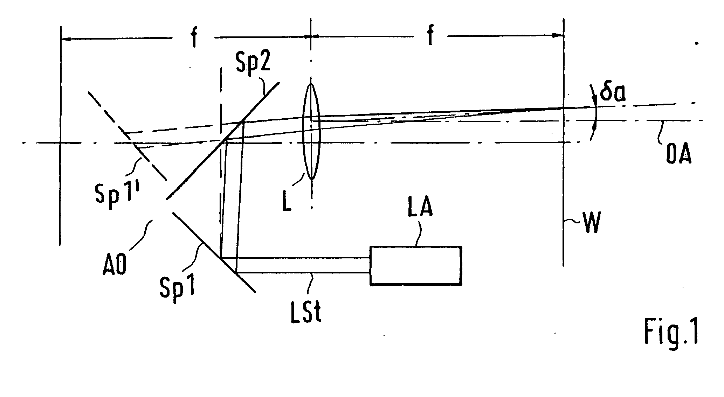

Eine in Fig. 1 gezeigte optische Vorrichtung zum Bohren bzw. Schneiden von Löchern in ein Werkstück W mittels Laserstrahls LSt weist zwei getrennt voneinander drehbare Spiegel Sp1 und Sp2 auf, wobei die Drehachsen orthogonal zueinander gerichtet sind. Beispielsweise erfolgt mittels des Spiegels Sp1 eine Ablenkung des von einer Lasereinheit LA kommenden Laserstrahls LSt in der Zeichenebene, während mittels des Spiegels Sp2 eine Ablenkung senkrecht zur Zeichenebene erfolgt. Eine im Strahlengang nach dem Spiegel Sp2 folgende Fokussieroptik mit einer Linse L fokussiert den Laserstrahl LSt auf dem Werkstück W, um die Energie zum Bohren bzw. Schneiden zu bündeln. Der Abstand des Werkstückes W entspricht dabei der Brennweite f der Linse L, wobei zum Variieren der Schneid- bzw. Bohreigenschaften und Beeinflussen der Bohrkontur der Abstand auch unterschiedlich eingestellt werden kann, so dass sich beispielsweise die Eintrittsseite der Bohrung oder aber deren Austrittsseite näher am Fokussierungspunkt befindet.

Der Spiegel Sp1 befindet sich beispielhaft innerhalb der Brennweite f im Strahlengang vor der Linse L, wie gestrichelt mit dem virtuellen Bild Sp1' dargestellt. Dadurch fällt das Strahlenbündel des Laserstrahls LSt in der Weise schräg auf die Fokussieroptik L, dass die Hauptrichtung des von der Fokussieroptik L auf das Werkstück W unter einem Winkel δα bezüglich der optischen Hauptachse OA trifft. Hierdurch ergibt sich ein schräger Einstich des Laserstrahls in das Werkstück W, wodurch ein sich nach außen von der Bohrungseintrittsseite zur Bohrungsaustrittsseite erweiternder Bohrungslängsschnitt erzielbar ist. Durch Änderung der Position des ersten Spiegels Sp1 kann der Einstichwinkel δα und damit der Konturverlauf über den Längsschnitt der Bohrung variiert werden, wobei sich anstelle der konischen Aufweitung mit unterschiedlichem Öffnungswinkel auch z.B. eine konische Verengung mit unterschiedlichem Öffnungswinkel erzielen lässt. Dabei kann die Kontur des Längsschnittes noch durch Variieren des Abstandes zwischen der Fokussieroptik L und dem Werkstück W beeinflusst werden, wie vorstehend angesprochen. Wenn z.B. der Abstand des virtuellen Bildes Sp1' im Abstand f liegt, ist der Einstichwinkel δα gleich 0.

Eine weitere Beeinflussung der Bohrungskontur im Längsschnitt ist durch geeignete Wahl der Linse L hinsichtlich ihrer Brennweite oder auch ihrer Brechungseigenschaften unter spezieller Gestaltung der Brechungsindizes erreichbar, so dass eine Abstimmung auf den jeweiligen Einsatzfall ermöglicht wird. Beispielsweise eignet sich die optische Vorrichtung zum Herstellen von Löchern in Dieseleinspritzdüsen und Erzielen eines gewünschten, genau reproduzierbaren Einspritzbildes. Außer kreisrunden Lochquerschnitten sind durch entsprechende Ansteuerung der getrennt drehbaren Spiegel Sp1 und Sp2 auch praktisch beliebige andere Lochquerschnitte erzielbar. Die Anwendung der Vorrichtung dient zum Bohren bzw. Schneiden von Löchern, deren Weite im Vergleich zur Materialstärke gering ist, wobei der Faktor der Materialstärke zur Lochweite z.B. größer als 5 oder 10 ist.

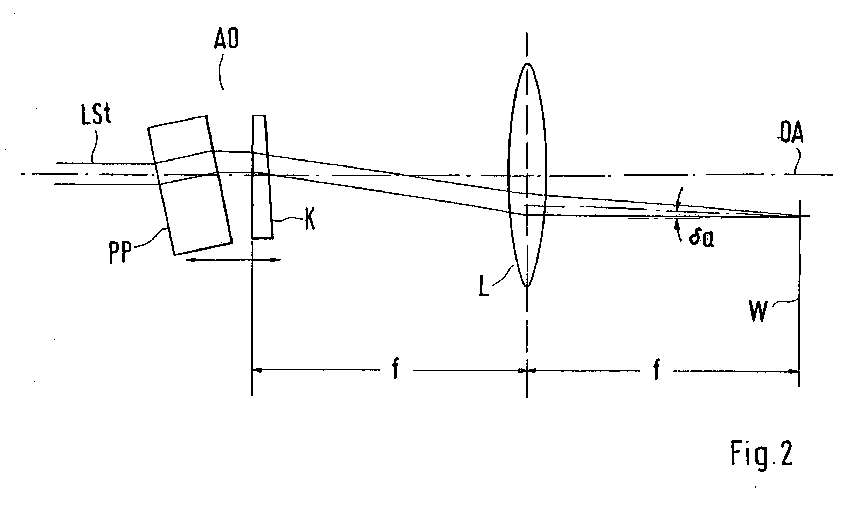

Fig. 2 zeigt eine weitere Vorrichtung zum optischen Bohren von Löchern in Form einer Trepanieroptik. Hierbei sind im Strahlengang des Laserstrahls LSt von der (hier nicht gezeigten) Lasereinheit LA aus zunächst eine planparallele Platte PP, mit der der Laserstrahl LSt bezüglich der optischen Hauptachse OA parallel versetzt wird, und eine Keilplatte K, mit der der Laserstrahl LSt gekippt wird, vor der Fokussieroptik mit der Linse L angeordnet. Durch den Parallelversatz aus dem Bereich der optischen Hauptachse OA und die anschließende Kippung fällt der Laserstrahl LSt derart schräg auf die Linse L, dass der von der Linse L auf das Werkstück W geführte und dort gebündelte Laserstrahl LSt in seiner Hauptrichtung von der Richtung der optischen Hauptachse OA um den Einstichwinkel δα abweicht. Durch Verschiebung der Keilplatte K bezüglich der Linse L oder der Linse L bezüglich der Keilplatte K parallel zur optischen Hauptachse OA lässt sich der Auftreffwinkel des Laserstrahls LSt auf der Linse L und damit der Einstichwinkel δα variieren. Die Keilplatte K kann dabei getrennt von der planarallelen Platte PP oder zusammen mit dieser als Einheit verschoben werden. Der Trepanierradius lässt sich durch relative Verstellung zweier Keil-Keilplatten K variieren, wie in der eingangs erwähnten DE 197 41 029 A1 angegeben. Ferner sind Linsen mit gezielt gestalteten Brechungsindizes zur weiteren Beeinflussung des Bohrungslängsschnittes einsetzbar.

Da die Verschiebebewegung zum Erzielen der gewünschten Kontur des Bohrungslängsschnittes wesentlich ist, ist der Verschiebemechanismus zur genauen, reproduzierbaren Justierung des Verschiebeweges ausgebildet, wobei die Einstellvorrichtung zum definierten manuellen Verstellen oder automatisch gesteuerten Verschieben mittels einer Steuereinheit ausgebildet ist.

## Patentansprüche

1. Optische Vorrichtung zum Bohren von im Vergleich zur Materialstärke eines Werkstückes (W) engen Löchern mittels Laserstrahls (LSt) mit einer Auslenkoptik (AO), mit der eine Lochweite vorgegeben oder vorgebbar ist und die eine Anordnung zur Bestimmung eines Einstichwinkels (δα) des Laserstrahls (LSt) in das Werkstück (W) aufweist und mit einer Fokussieroptik (L) zum Fokussieren des Laserstrahls auf oder nahe dem Werkstück (W),
**dadurch gekennzeichnet,**
**dass** die Anordnung mindestens ein Ablenkspiegel (Sp1) der Auslenkoptik (AO) ist, dessen optischer Abstand relativ zur Fokussieroptik (L) parallel zur optischen Hauptachse (OA) änderbar ist.

2. Optische Vorrichtung nach Anspruch 1,
**dadurch gekennzeichnet,**
**dass** der Spiegel (Sp1) und/oder die Fokussieroptik (L) verschieblich gelagert ist/sind
und/oder ein die optische Weglänge beeinflussendes Element zwischengeschaltet ist.

3. Optische Vorrichtung zum Bohren von im Vergleich zur Materialstärke eines Werkstückes (W) engen Löchern mittels Laserstrahls (LSt) mit einer Auslenkoptik (AO), mit der eine Lochweite vorgegeben oder vorgebbar ist und die eine Anordnung zur Bestimmung eines Einstichwinkels (δα) des Laserstrahls (LSt) in das Werkstück (W) aufweist und mit einer Fokussieroptik (L) zum Fokussieren des Laserstrahls auf oder nahe dem Werkstück (W), wobei die Auslenkoptik (AO) zum Vorgeben der Lochweite eine Keilplatte (K) und zum Bestimmen des Einstichwinkels (δα) eine planparallele Platte (PP) aufweist,
**dadurch gekennzeichnet,**
**dass** zur Änderung der optischen Weglänge zwischen der Ablenkoptik (Ao) und der Fokussieroptik (L) die Keilplatte (K) allein oder als Einheit zusammen mit der planparallelen Platte (PP) parallel zur optischen Hauptachse (OA) und/oder die Fokussieroptik (L) verschieblich gelagert ist/sind und/oder ein optisches Element zwischengeschaltet ist.

4. Optische Vorrichtung nach einem der vorhergehenden Ansprüche,
**dadurch gekennzeichnet,**
**dass** mindestens eine Linse der Fokussieroptik (L) zum Bestimmen des Einstichwinkels (δα) mit speziell gestalteten Brechungsindizes ausgebildet ist.

## Claims

1. Optical device for drilling holes that are narrow in comparison with the material thickness of a workpiece (W) by means of a laser beam (LSt), comprising a deflection optic (AO), by means of which a hole width is predetermined or predeterminable and which has an arrangement for determining a penetration angle (δα) of the laser beam (LSt) into the workpiece (W), and comprising a focusing optic (L) for focusing the laser beam on or near the workpiece (W),
**characterized**
**in that** the arrangement is at least one deflection mirror (Sp1) of the deflection optic (AO) whose optical distance relative to the focusing optic (L) can be changed parallel to the principal optical axis (OA).

2. Optical device according to Claim 1,
**characterized**
**in that** the mirror (Sp1) and/or the focusing optic (L) are/is mounted in a displaceable manner
and/or an element that influences the optical path length is interposed.

3. Optical device for drilling holes that are narrow in comparison with the material thickness of a workpiece (W) by means of a laser beam (LSt), comprising a deflection optic (AO), by means of which a hole width is predetermined or predeterminable and which has an arrangement for determining a penetration angle (δα) of the laser beam (LSt) into the workpiece (W), and comprising a focusing optic (L) for focusing the laser beam on or near the workpiece (W), the deflection optic (AO) having a wedge plate (K) for predetermining the hole width and a plane-parallel plate (PP) for determining the penetration angle (δα), **characterized**
**in that**, for changing the optical path length between the deflection optic (Ao) and the focusing optic (L), the wedge plate (K) alone or as a unit together with the plane-parallel plate (PP) parallel to the principal optical axis (OA) and/or the focusing optic (L) are/is mounted in a displaceable manner and/or an optical element is interposed.

4. Optical device according to one of the preceding claims,
**characterized**
**in that** at least one lens of the focusing optic (L) is embodied for determining the penetration angle (δα) with specially configured refractive indices.

## Revendications

1. Dispositif optique pour percer avec un faisceau laser (LSt) des trous relativement étroits par rapport à l'épaisseur de la matière d'une pièce (W), comprenant une optique de déflexion (AO), permettant de prédéfinir une dimension de trou et un dispositif pour déterminer l'angle de pénétration (δα) du faisceau laser (LSt) dans la pièce (W) ainsi qu'une optique de focalisation (L) pour focaliser le faisceau laser sur ou à proximité de la pièce (W),
**caractérisé en ce que**
le dispositif est au moins un miroir de déflexion (Sp1) de l'optique de déflexion (AO) dont la distance optique par rapport à l'optique de focalisation (L), parallèlement à l'axe optique principal (OA), est variable.

2. Dispositif optique selon la revendication 1,
**caractérisé en ce que**
le miroir (Sp1) et/ou l'optique de focalisation (L) sont coulissants et/ou un élément influençant le chemin optique est interposé.

3. Dispositif optique pour percer des trous étroits par comparaison à l'épaisseur de la matière d'une pièce (W) à l'aide d'un faisceau laser (LSt), comprenant une optique de déflexion (AO) qui prédéfinit ou permet de prédéfinir une dimension de trou et un dispositif pour déterminer l'angle de pénétration (δ, α) du faisceau laser (LSt) dans la pièce (W) ainsi qu'une optique de focalisation (L) pour focaliser le faisceau laser sur ou à proximité de la pièce (W), l'optique de déflexion (AO) comportant une plaque en forme de coin (K) pour prédéfinir la dimension des trous et une plaque à plans parallèles (PP) pour déterminer l'angle de pénétration (δ, α),
**caractérisé en ce que**
pour modifier le trajet optique entre l'optique de déflexion (Ao) et l'optique de focalisation (L), la plaque en forme de coin (K) est installée seule ou avec la plaque à plans parallèles (PP), parallèlement à l'axe optique principal (OA) et/ou l'optique de focalisation (L) et/ou un élément optique est interposé.

4. Dispositif optique selon l'une des revendications précédentes,
**caractérisé en ce qu'**
au moins une lentille de l'optique de focalisation (L) pour déterminer l'angle de pénétration (δ, α) est réalisée avec un indice de réfraction de conception particulière.
